# EUROPÄISCHE PATENTSCHRIFT

(11) **EP 3 685 629 B1**
(45) Veröffentlichungstag und Bekanntmachung des Hinweises auf die Patenterteilung: **05.05.2021**
(21) Anmeldenummer: 18745587.8
(22) Anmeldetag: 24.07.2018
(51) Int. Cl.: H05B 3/14, H05B 3/78, F01N 3/20

(54) **HEIZEINRICHTUNG**
HEATING DEVICE
DISPOSITIF DE CHAUFFAGE

(30) Priorität: 21.09.2017 DE 102017216723
(43) Veröffentlichungstag der Anmeldung: 29.07.2020
(73) Patentinhaber: Robert Bosch GmbH, 70442 Stuttgart (DE)
(72) Erfinder: RUIGROK VAN DE WERVE, Jan, 70184 Stuttgart (DE)
(86) Internationale Anmeldenummer: PCT/EP2018/069998
(87) Internationale Veröffentlichungsnummer: WO 2019/057364

(56) Entgegenhaltungen:
- WO-A1-91/17642
- DE-A1-102010 062 982
- DE-A1-102015 016 638

## Beschreibung

### Stand der Technik

Die Erfindung geht aus von einer Heizeinrichtung bzw. einer Tankeinbaueinheit bzw einem Verfahren zur Herstellung einer Heizeinrichtung nach der Gattung der unabhängigen Ansprüche.

Es sind bereits Heizeinrichtungen z.B. aus der DE102011084962, mit Heizelementen und Wärmeverteilkörper bekannt, bei denen aber die Heizelemente als vorgefertigte bzw. gestückelte PTC-Heizelemente ausgebildet sind, welche über Stromschienen kontaktiert werden. Ein mit den Heizelementen gekoppelter Wärmeleitkörper ist dabei mit einer Kunststoffschicht umspritzt.

Tankeinbaueinheiten mit solchen Heizeinrichtungen, welche daneben beispielsweise auch eine Förderpumpe, eine Sensorik, z.B. eine Füllstandssensorik, und eine Filtereinrichtung aufweisen bzw. tragen können, sind aus der DE102015200168 bekannt. Solche Tankeinbaueinheiten können an die Öffnung eines Tanks beispielsweise im Bodenbereich des Tanks angeflanscht oder im Bereich der Öffnung angeordnet und mit der Tankwand verschweißt werden. Derartige Anordnungen lassen nur einen bestimmten Durchmesser der Tankeinbaueinheit zu, der sich als Bauraumbegrenzung auf alle auf dem Träger der Tankeinbaueineheit befindlichen Bauteile auswirkt.

Die DE 10 2010 062 982 A1 offenbart ein Tankeinbaumodul mit einem elektrischen Heizelement, welches einen Heizkörper mit einer umspritzten Kunststoffummantelung umfaßt.

Die WO 91/17642 beschreibt einen Heizer mit einem Widerstandsheizelement, welches eine leitfähige Polymerzusammensetzung umfaßt.

Die DE 10 2015 016 638 A1 zeigt eine Heizeinrichtung, wobei elektrische Heizelemente vorgesehen sind, welche in einer Schicht eines topfartigen Behältnisses aufgenommen sind.

### Offenbarung der Erfindung

Die erfindungsgemäße Heizeinrichtung bzw. Tankeinbaueinheit bzw. das erfindungsgemäße Herstellungsverfahren mit den kennzeichnenden Merkmalen der unabhängigen Ansprüche haben demgegenüber den Vorteil eines vereinfachten Aufbaus und der Möglichkeit der Bereitstellung einer verbesserten Funktionsweise. Es sind keine undefinierten Verstemm- oder Verklammerprozesse notwendig, keine fragilen Isolationskeramiken, keine vorgefertigten PTC-Elemente, keine separaten Stromschienen.

Durch die in den abhängigen Ansprüchen aufgeführten Maßnahmen sind vorteilhafte Weiterbildungen und Verbesserungen der in den unabhängigen Ansprüchen angegebenen Heizvorrichtung bzw. Tankeinbaueinheit bzw. dem Herstellungsverfahren möglich.

### Kurze Beschreibung der Zeichnungen

Ausführungsbeispiele der Erfindung sind in der Zeichnung dargestellt und in der nachfolgenden Beschreibung näher erläutert.

### Es zeigen

- Figur 1: eine Heizeinrichtung,
- Figur 2: einen Rammkontakt und
- Figur 3: eine Tankeinbaueinheit.

### Ausführungsformen der Erfindung

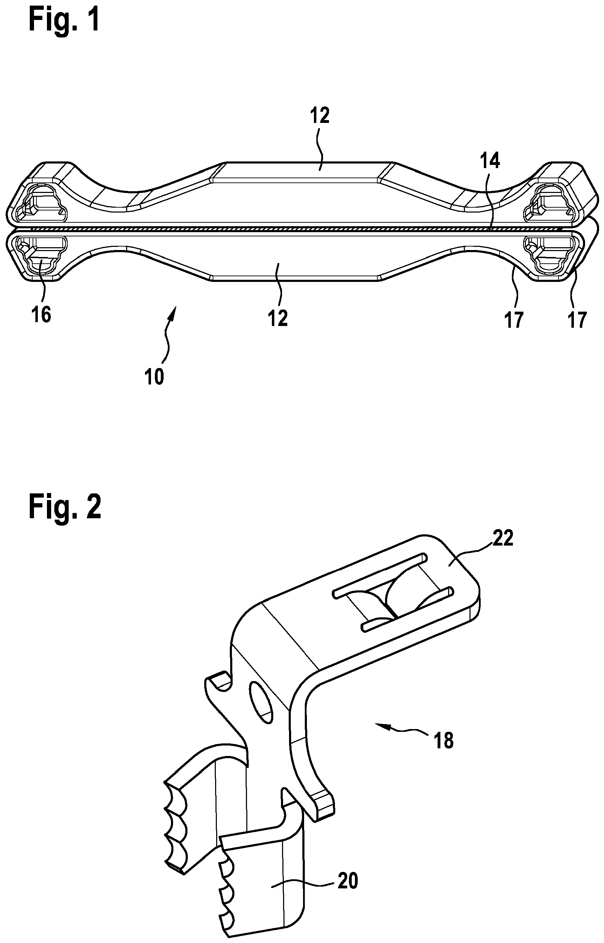

In Figur 1 ist eine Heizeinrichtung 10 in perspektivischer Ansicht dargestellt. Sie umfaßt ein flächiges, im vorliegenden Ausführungsbeispiel langgestrecktes Heizelement 14, welches zwischen zwei Wärmeleitkörpern 12 angeordnet ist. Die Wärmeleitkörper 12 sind beispielsweise aus Aluminium gefertigt. Es handelt sich bei den Wärmeleitkörpern vorzugsweise, wie abgebildet, um symmetrische Gleichteile. An ihren Enden entlang ihrer Längserstreckung weisen sie Vertiefungen 16 auf, welche dazu dienen, die Heizeinrichtung auf einer Bodenplatte oder dergleichen zu positionieren bzw. zu arretieren, beispielsweise durch eine Schnapp-/Klemm-Verbindung.

Das Heizelement 14 ist aus einem heizfähigen, d.h. elektrisch leitfähigen Kunststoff gefertigt. Dies kann beispielsweise hochdichtes Polyethylen ("HDPE") sein, dem Graphit mit einem Massenanteil insbesondere von 30 bis 45 Prozent an der Gesamtmasse des Heizelements beigefügt wurde. Die beiden Wärmeleitkörper 12 sind hierbei mittels dieses elektrisch leitfähigen Kunststoffmaterials miteinander verklebt. Im Falle der Verwendung von HDPE mit der genannten Graphit-Beimischung weist das Heizelement ein selbstabregelndes Verhalten auf, das heißt, bei anliegender elektrischer Spannung zwischen den beiden Wärmeleitkörpern erhöht sich der elektrische Widerstand signifikant, wenn die die Temperatur ansteigt bzw. wenn sie einen gewissen Schwellenwert überschreitet. Die Wärmeableitung an eine Flüssigkeitsumgebung ist mit den zwei einfach gebauten Wärmeleitkörpern aus Aluminium optimiert. Diese geben zwischen Ihnen entstehende Wärme effektiv und großflächig ab.

Für eine dauerhafte Verbindung dieser Aluminiumwärmeleitkörper werden diese auf der im fertigen Zustand der Heizeinrichtung dem Heizelement 14 zugewandten Kontaktseite entsprechend vorbehandelt. Es ist hierzu eine rauhe Oberfläche (gemittelte Rautiefe Rz 36..100) vorgesehen, diese wird vorzugsweise mittels einer Plasmabehandlung bereitgestellt. Anschließend werden die Aluminiumwärmeleitkörper in einem Werkzeug verspannt. Dann wird die Kontaktschicht bzw. das dann das Heizelement 14 bildende Material eingespritzt. Danach sind die Aluminiumwärmleitkörper fest miteinander verbunden. Sie werden in einem weiteren Schritt in ein anderes Werkzeug eingelegt und geeignet positioniert, so daß sie zum Zwecke des Korrosionsschutzes ringsherum mit (nicht elektrisch leitfähigem) hochdichten Polyethylen umspritzt werden können.

In einer bevorzugten Variante des Herstellungsverfahrens werden elektrische Kontakte, insbesondere in Form von Rammkontakten, erst nach dem genannten Umspritzungsprozess eingepresst. Dadurch vereinfacht sich das Herstellungsverfahren. Dies erleichtert die Abdichtung des Kontaktbereiches im Umspritzungswerkzeug.

Figur 2 zeigt beispielhaft einen solchen Rammkontakt 18, welcher einenends eine zweiflügelige Rammklemme 20 und am abgebogenen anderen Ende einen Anschlußbereich 22 aufweist. Die beiden Flügel der Rammklemme 20 können hierbei im Bereich der beiden jeweils einer Vertiefung 16 benachbarten Flanken 17 (siehe Figur 1) eines Wärmeleitkörpers 12 eingerammt bzw. eingepreßt werden. Dies geschieht bei jedem Wärmeleitkörper mindestens an jeweils einem solchen Flankenpaar 17, um im Falle eines Heizbedarfs einen elektrischen, ohmsche Wärme erzeugenden Stromfluß über die Wärmeleitkörper durch das Heizelement 14 hindurch anregen zu können.

Die fertige Heizeinrichtung 10 kann beispielsweise zu einem Bestandteil einer Tankeinbaueinheit werden, wobei eine Verschweissung der Heizeinrichtung 10 im Bereich ihrer Vertiefungen 16 mit einem Bodenbereich der Tankeinbaueinheit erfolgen kann.

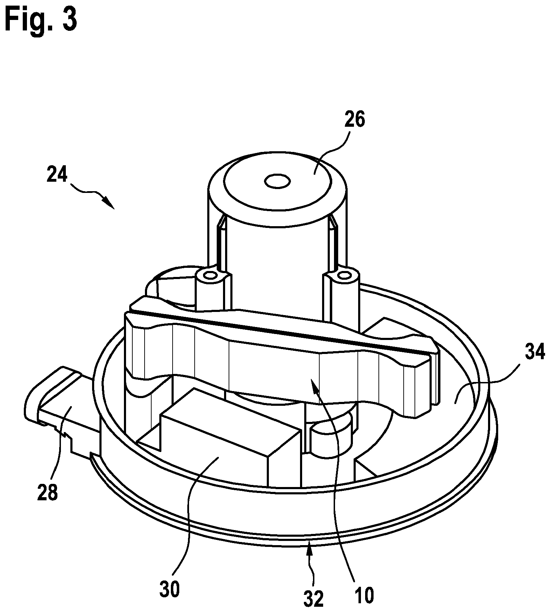

Eine solche Tankeinbaueinheit 24 speziell zur Montage in einem Bodenbereich eines Flüssigkeitstanks ist in Figur 3 dargestellt. Die fluiddichte Verbindung der Tankeinbaueinheit 24 mit dem Flüssigkeitstank erfolgt am Rand eines Bodenbereichs 32 der Tankeinbaueinheit, beispielsweise durch Verschweissen mit dem Tankboden. Der Bodenbereich bzw. Träger 32 trägt verschiedene Funktionskomponenten, beispielhaft sind eine Förderpumpe 26, eine Füllstandssensorik 30 und eine Filtereinrichtung 34 dargestellt. Hinzu kommen elektrische bzw. hydraulische Anschlüsse zur elektrischen Ansteuerung von Funktionskomponenten bzw. zum Abtransport der im Tank bevorrateten Flüssigkeit. Die Heizeinrichtung 10 nun ist an geeigneter Stelle positioniert, um temperaturkritische Stellen gut beheizen zu können, insbesondere um gefriergefährdete Bereiche hinreichend warm zu halten bzw. aufzutauen, um einen steten Abtransport von Flüssigkeit aus dem Tank unter Einsatz der Förderpumpe zu gewährleisten.

Die Heizeinrichtung ist insbesondere für Tankeinbaueinheiten für Vorratsbehälter geeignet, welche mit einer wässrigen Harnstofflösung befüllt werden können, um dieses Reduktionsmittel zur selektiven katalytischen Reduktion von Stickoxiden einer Brennkraftmaschine eines Kraftwagens bereitzustellen. Die Heizeinrichtung kann auch für die Beheizung bzw. das Auftauen anderer Flüssigkeiten eingesetzt werden, auch für andere Einsatzzwecke im Bereich des Beheizens insbesondere von Flüssigkeiten vorgesehen sein.

## Patentansprüche

1. Heizeinrichtung (10) zur Beheizung einer Flüssigkeit, insbesondere einer Flüssigkeit in einem Tank zur Bevorratung der Flüssigkeit, mit mindestens einem Heizelement (14) und mindestens einem Wärmeleitkörper (12), vorzugsweise einem aus Aluminium gefertigten Wärmeleitkörper (12), **dadurch gekennzeichnet, daß** das Heizelement (14) aus einem elektrisch leitfähigen Kunststoffmaterial besteht und daß das elektrisch leitfähige Kunststoffmaterial mit dem Wärmleitkörper (12) elektrisch leitend und wärmeleitend gekoppelt ist, wobei das Heizelement (14) zwischen mindestens zwei Wärmeleitkörpern (12) flächig angeordnet ist, und wobei das Heizelement (14) die zwei Wärmeleitkörper (12) mechanisch fest miteinander verbindet.

2. Heizeinrichtung (10) nach Anspruch 1, daß das elektrisch leitfähige Kunststoffmaterial mit dem Wärmeleitkörper (12) in direktem mechanischen Kontakt steht.

3. Heizeinrichtung (10) nach Anspruch 1 oder 2, **dadurch gekennzeichnet, daß** das elektrisch leitfähige Kunststoffmaterial eine Kunststoffkomponente und eine elektrisch leitende Komponente enthält.

4. Heizeinrichtung (10) nach Anspruch 3, **dadurch gekennzeichnet, daß** die Kunststoffkomponente Polyethylen, insbesondere hochdichtes Polyethylen ("HDPE"), Polyamid und/oder Polyarylamid, vorzugsweise hochdichtes Polyethylen, enthält.

5. Heizeinrichtung (10) nach Anspruch 3 oder 4, **dadurch gekennzeichnet, daß** die elektrisch leitende Komponente Graphit ist.

6. Heizeinrichtung (10) nach Anspruch 5, **dadurch gekennzeichnet, daß** ca 30 bis 45 Prozent der Gesamtmasse des Kunststoffmaterials aus Graphit besteht.

7. Heizeinrichtung (10) nach einem der vorhergehenden Ansprüche, **dadurch gekennzeichnet, daß** an die mindestens zwei Wärmeleitkörper (12) jeweils ein Kontaktelement (18) angebracht ist.

8. Heizeinrichtung (10) nach Anspruch 7, **dadurch gekennzeichnet, daß** die Kontaktelemente als Rammkontakte ausgebildet sind.

9. Heizeinrichtung (10) nach einem der vorhergehenden Ansprüche, **dadurch gekennzeichnet, daß** das Heizelement (14) und der bzw. die Wärmeleitkörper (12) mit einer Kunststoffschicht umhüllt sind, insbesondere mit Kunststoff umspritzt sind.

10. Tankeinbaueinheit (24) zum Einbau insbesondere in einen Bodenbereich eines Tanks zur Bevorratung von Flüssigkeit, **dadurch gekennzeichnet, daß** eine Heizeinrichtung (10) nach einem der vorhergehenden Ansprüche vorgesehen ist.

11. Verfahren zur Herstellung einer Heizeinrichtung zur Beheizung einer Flüssigkeit, insbesondere einer Flüssigkeit in einem Tank zur Bevorratung der Flüssigkeit, mit mindestens einem Wärmeleitkörper (12) und mindestens einem Heizelement (14), **dadurch gekennzeichnet, daß** für das Heizelement ein elektrisch leitfähiges Kunststoffmaterial verwendet wird und daß das elektrisch leitfähige Kunststoffmaterial mit dem Wärmleitkörper (12) elektrisch leitend und wärmeleitend gekoppelt wird, wobei das Heizelement (14) zwischen mindestens zwei Wärmeleitkörpern (12) flächig angeordnet wird, und wobei das Heizelement (14) die zwei Wärmeleitkörper (12) mechanisch fest miteinander verbindet.

## Claims

1. Heating device (10) for heating a liquid, in particular a liquid in a tank for storing the liquid, comprising at least one heating element (14) and at least one thermally conductive body (12), preferably a thermally conductive body (12) which is manufactured from aluminium, **characterized in that** the heating element (14) consists of an electrically conductive plastics material, and **in that** the electrically conductive plastics material is electrically conductively and thermally conductively coupled to the thermally conductive body (12), wherein the heating element (14) is arranged in a sheet-like manner between at least two thermally conductive bodies (12), and wherein the heating element (14) connects the two thermally conductive bodies (12) to one another in a mechanically fixed manner.

2. Heating device (10) according to Claim 1, that the electrically conductive plastics material is in direct mechanical contact with the thermally conductive body (12).

3. Heating device (10) according to Claim 1 or 2, **characterized in that** the electrically conductive plastics material contains a plastics component and an electrically conductive component.

4. Heating device (10) according to Claim 3, **characterized in that** the plastics component contains polyethylene, in particular high-density polyethylene ("HDPE"), polyamide and/or polyarylamide, preferably high-density polyethylene.

5. Heating device (10) according to Claim 3 or 4, **characterized in that** the electrically conductive component is graphite.

6. Heating device (10) according to Claim 5, **characterized in that** approximately 30 to 45 percent of the total mass of the plastics material consists of graphite.

7. Heating device (10) according to one of the preceding claims, **characterized in that** a contact element (18) is attached to each of the at least two thermally conductive bodies (12).

8. Heating device (10) according to Claim 7, **characterized in that** the contact elements are designed as ram contacts.

9. Heating device (10) according to one of the preceding claims, **characterized in that** the heating element (14) and the thermally conductive body or bodies (12) are encased with a plastics layer, in particular are encapsulated by injection moulding with plastic.

10. Tank installation unit (24) for installation, in particular, into a base region of a tank for storing liquid, **characterized in that** a heating device (10) according to one of the preceding claims is provided.

11. Method for producing a heating device for heating a liquid, in particular a liquid in a tank for storing the liquid, comprising at least one thermally conductive body (12) and at least one heating element (14), **characterized in that** an electrically conductive plastics material is used for the heating element, and **in that** the electrically conductive plastics material is electrically conductively and thermally conductively coupled to the thermally conductive body (12), wherein the heating element (14) is arranged in a sheet-like manner between at least two thermally conductive bodies (12), and wherein the heating element (14) connects the two thermally conductive bodies (12) to one another in a mechanically fixed manner.

## Revendications

1. Dispositif de chauffage (10) destiné à chauffer un liquide, en particulier un liquide dans un réservoir de stockage du liquide, ledit dispositif comprenant au moins un élément chauffant (14) et au moins un corps conducteur de chaleur (12), de préférence un corps conducteur de chaleur (12) en aluminium, **caractérisé en ce que** l'élément chauffant (14) est en une matière synthétique électriquement conductrice et **en ce que** la matière synthétique électriquement conductrice est couplée au corps conducteur de chaleur (12) d'une manière électriquement conductrice et thermoconductrice, l'élément chauffant (14) étant disposé de manière sensiblement bidimensionnelle entre au moins deux corps conducteurs de chaleur (12), et l'élément chauffant (14) reliant les deux corps conducteurs de chaleur (12) l'un à l'autre d'une manière mécaniquement fixe.

2. Dispositif de chauffage (10) selon la revendication 1, que la matière synthétique électriquement conductrice est en contact mécanique direct avec le corps conducteur de chaleur (12).

3. Dispositif de chauffage (10) selon la revendication 1 ou 2, **caractérisé en ce que** la matière synthétique électriquement conductrice contient un composant de matière synthétique et un composant électriquement conducteur.

4. Dispositif de chauffage (10) selon la revendication 3, **caractérisé en ce que** le composant de matière synthétique contient du polyéthylène, notamment du polyéthylène à haute densité (« HDPE »), du polyamide et/ou du polyarylamide, de préférence du polyéthylène à haute densité.

5. Dispositif de chauffage (10) selon la revendication 3 ou 4, **caractérisé en ce que** le composant électriquement conducteur est en graphite.

6. Dispositif de chauffage (10) selon la revendication 5, **caractérisé en ce qu'**environ 30 à 45 pour cent de la masse totale de la matière synthétique est du graphite.

7. Dispositif de chauffage (10) selon l'une des revendications précédentes, **caractérisé en ce qu'**un élément de contact (18) est fixé à chacun des au moins deux corps conducteurs de chaleur (12).

8. Dispositif de chauffage (10) selon la revendication 7, **caractérisé en ce que** les éléments de contact sont réalisés sous la forme de contacts à piston.

9. Dispositif de chauffage (10) selon l'une des revendications précédentes, **caractérisé en ce que** l'élément chauffant (14) et le ou les corps conducteurs de chaleur (12) sont enrobés d'une couche de matière synthétique, notamment encapsulés de matière synthétique.

10. Unité d'installation de réservoir (24) destinée à être installée notamment dans une zone inférieure d'un réservoir de stockage de liquide, **caractérisée en ce qu'**un dispositif de chauffage (10) est prévu selon l'une des revendications précédentes.

11. Procédé de réalisation d'un dispositif de chauffage destiné à chauffer un liquide, en particulier un liquide situé dans un réservoir de stockage du liquide, ledit dispositif comprenant au moins un corps conducteur de chaleur (12) et au moins un élément chauffant (14), **caractérisé en ce qu'**une matière synthétique électriquement conductrice est utilisée pour l'élément chauffant et **en ce que** la matière synthétique électriquement conductrice est couplée au corps conducteur de chaleur (12) d'une manière électriquement conductrice et thermoconductrice, l'élément chauffant (14) étant disposé de manière sensiblement bidimensionnelle entre au moins deux corps conducteurs de chaleur (12), et l'élément chauffant (14) reliant les deux corps conducteurs de chaleur (12) l'un à l'autre d'une manière mécaniquement fixe.
